# EUROPEAN PATENT APPLICATION

(11) **EP 2 740 912 A1**
(43) Date of publication of application: **11.06.2014**
(21) Application number: 13182129.0
(22) Date of filing: 29.08.2013
(51) Int. Cl.: F01N 3/08, F02D 41/02, F01N 9/00

(54) **Exhaust gas after-treatment method**

(30) Priority: 10.12.2012 KR 20120143086
(71) Applicant: HYUNDAI MOTOR COMPANY, Seoul (KR)
(72) Inventor: Park, Jun Sung, Gyeonggi-do (KR)
(74) Representative: Viering, Jentschura & Partner Patent- und Rechtsanwälte

(57) **Abstract**

An exhaust gas after-treatment method includes determining a regeneration condition of a particulate matter filter, eliminating trapped particulate matter to a predetermined amount by raising a temperature of exhaust gas to a first value so as to regenerate the particulate matter filter. An exhaust gas flows into a nitrogen oxide purifier is controlled in a lean condition (air/fuel ratio > 14.5) while the particulate matter filter is being regenerated sulfur components are eliminated from the nitrogen oxide purifier by controlling exhaust gas that flows into the nitrogen oxide purifier after the lean condition is performed. Subsequently, the lean condition and a rich condition (air/fuel ratio < 14.5), and then completes the regeneration of the particulate matter filter is completed or the elimination of the sulfur component from the nitrogen oxide purifier is completed.

## Description

### CROSS-REFERENCE TO RELATED APPLICATION

This application claims priority to and the benefit of Korean Patent Application No. 10-2012-0143086 filed in the Korean Intellectual Property Office on December 10, 2012, the entire contents of which are incorporated herein by reference.

### TECHNICAL FIELD

The present disclosure relates to an exhaust gas after-treatment method, and more particularly, to an exhaust gas after-treatment method controlling a temperature of exhaust gas to eliminate sulfur from a nitrogen oxide purifier and particulate matter from a particulate matter filter.

### BACKGROUND

Generally, a particulate matter filter filters particulate matter (PM) included in exhaust gas. Further, the filtered particulate matter is burned at high temperature to be eliminated. The elimination of PM is called "regeneration".

A nitrogen oxide purifier (LNT: lean NOx trap) absorbs nitrogen oxide included in the exhaust gas where the nitrogen oxide is reduced by a reaction with a reducing agent under predetermined conditions.

In a case in which the nitrogen oxide purifier is disposed at a downstream side of an exhaust manifold, and the particulate matter filter at a downstream side of the nitrogen oxide purifier, sulfur components move with the exhaust gas to be continuously absorbed in the nitrogen oxide purifier.

The sulfur compound absorbed in the nitrogen oxide purifier deteriorates the nitrogen oxide purification performance, and therefore, the sulfur component has to be cyclically eliminated.

Further, a high temperature condition is necessary to eliminate the sulfur component while the particulate matter filter is being regenerated. A process for eliminating the sulfur component from the nitrogen oxide purifier during the regeneration of the particulate matter filter has been developed. However, when the sulfur components are eliminated during the regeneration of the particulate matter filter, the nitrogen oxide purifier can be damaged by an excessive high temperature, thus deteriorating the purification performance.

The above information disclosed in this Background section is only for enhancement of understanding of the background of the disclosure, and therefore may contain information that does not form the prior art already known in this country to a person of ordinary skill in the art.

### SUMMARY

The present disclosure has been made in an effort to provide an exhaust gas after-treatment method having advantages of preventing a nitrogen oxide purifier in a sulfur elimination process from overheating during a regeneration of a particulate matter filter.

An exhaust gas after-treatment method according to an exemplary embodiment of the present disclosure comprises determining a regeneration condition of a particulate matterfilter, eliminating trapped particulate matter up to a predetermined amount by raising a temperature of exhaust gas up to a first value so as to regenerate the particulate matter filter. Exhaust gas that flows into a nitrogen oxide purifier is controlled in a lean condition (air/fuel ratio > 14.5) while the particulate matter filter is being regenerated. Sulfur components are eliminated from the nitrogen oxide purifier by controlling exhaust gas that flows into the nitrogen oxide purifier after the lean condition is performed. The lean condition and a rich condition (air/fuel ratio < 14.5) are repeated. The regeneration of the particulate matter filter or the elimination of the sulfur components from the nitrogen oxide purifier is completed.

The nitrogen oxide purifier may be disposed at a downstream side of the particulate matter filter or disposed at a downstream side of the exhaust manifold.

The first value may range from 600 to 700 degrees Celsius. The temperature of exhaust gas may be raised to the first value in multiple steps to protect the particulate matter filter. The temperature of the exhaust gas flowing into the nitrogen oxide purifier may be controlled to be lower than 700 degrees Celsius such that the particulate matter trapped in the particulate matter filter is eliminated in the lean condition or may be controlled to be between a sulfur elimination minimum temperature and a sulfur elimination maximum temperature in the eliminating of the sulfur components from the nitrogen oxide purifier.

The regeneration condition of the particulate matter filter may be determined by an amount of the particulate matter trapped in the particulate matter filter, travel distance, a travel time, or a front/rear side pressure difference of the particulate matter filter.

The temperature of the exhaust gas flowing into the particulate matter filter or the nitrogen oxide purifier may be controlled by a main injector injecting fuel into a combustion chamber, an intake air controller, or a post-injection injector.

The completion of the regeneration of the particulate matter filter may be determined by the particulate matter trapped in the particulate matter filter, front/rear pressure difference, or regeneration time.

The completion of the sulfur elimination of the nitrogen oxide purifier may be determined by a sulfur amount stored in the nitrogen oxide device, a sulfur elimination time, or a sum of the rich condition duration time in the sulfur elimination process.

The exhaust gas may be controlled to be in a lean condition when the sulfur elimination of the nitrogen oxide purifier is completed, and the regeneration of the particulate matter filter device is not completed.

As described above, in an exhaust gas after-treatment method, after exhaust gas is controlled to be in a lean condition, the exhaust gas is controlled to be in a rich condition so as to eliminate sulfur components from the nitrogen oxide purifier during the regeneration of the particulate matter filter to prevent overheating of the nitrogen oxide purifier.

### BRIEF DESCRIPTION OF THE DRAWINGS

FIG. 1 is a schematic diagram of an exhaust gas after-treatment system according to an exemplary embodiment of the present disclosure.
FIG. 2 is a flowchart showing an exhaust gas after-treatment method according to an exemplary embodiment of the present disclosure.
FIG. 3 is a graph showing temperature of a nitrogen oxide purifier in an exhaust gas after-treatment method according to an exemplary embodiment of the present disclosure.

### DETAILED DESCRIPTION

An exemplary embodiment of the present disclosure will hereinafter be described in detail with reference to the accompanying drawings.

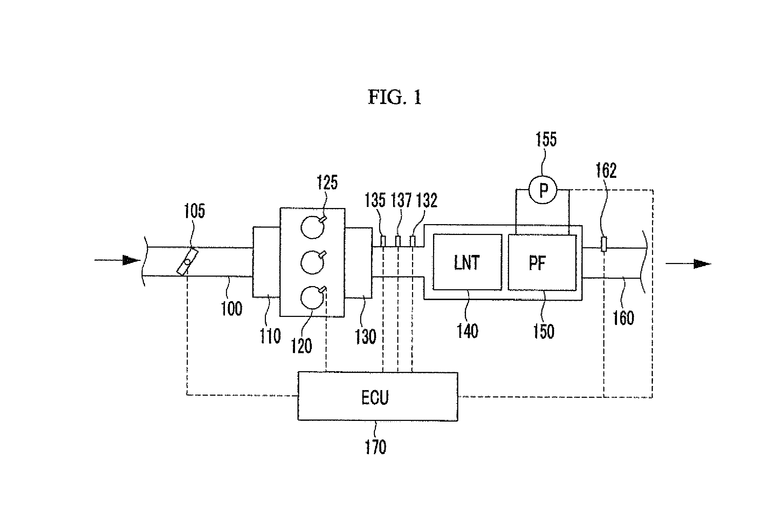

Referring to FIG. 1, an exhaust gas after-treatment system illustrates an exemplary embodiment for understanding of the present disclosure. Further, the present disclosure is not limited thereto and can be applied to various engine systems.

An exhaust gas after-treatment system includes an intake line 100, a throttle valve 105, an intake manifold 110, a combustion chamber 120, a main injector 125, an exhaust manifold 130, a post-injection injector 132, a temperature sensor 135, oxygen sensors 137 and 162, an exhaust line 160, a nitrogen oxide purifier 140, a particulate matter filter 150, and a differential pressure sensor 155. The main injector 125, which can perform the function of the post-injection injector without the post-injection injector, injects fuel into the combustion chamber 120, and the post-injection injector 132 injects fuel into the exhaust line 160. The main injector 125 generates engine torque through fuel combustion. Further, the main injector 125 and the post-injection injector 132 control the condition of exhaust gas passing through the exhaust line 160 to a lean or rich state and controls the temperature of the exhaust gas.

The oxygen sensors 137 and 162 detect oxygen concentration of the exhaust gas to transmit detected signals to a controller 170. The controller 170 determines whether the condition of the exhaust gas is lean or rich based on the received signals.

The throttle valve 105 controls intake air amount, the temperature sensor 135 detects the temperature of the exhaust gas passing through the exhaust line 160, and the differential pressure sensor 155 detects pressure difference between upstream side and downstream side of the particulate matter filter.

The controller 170 determines whether the regeneration condition for eliminating soot trapped in the particulate matter filter 150 is satisfied or not based on the differential pressure signal, travel distance, or travel time.

When the regeneration condition for the particulate matter filter 150 is satisfied, the temperature of the exhaust gas is raised to about 650 degrees Celsius to regenerate the particulate matter filter 150.

Further, the controller 170 performs a desulfation mode of the nitrogen oxide purifier 140 when the particulate matter trapped in the particulate matter filter 150 is reduced to a predetermined level,

When the desulfation mode begins, the condition of the exhaust gas flowing into the nitrogen oxide purifier 140 is controlled to the lean state such that the temperature of the exhaust gas flowing into the nitrogen oxide purifier 140 is securely sustained. Also, the exhaust gas flowing into the nitrogen oxide purifier 140 is controlled to be in the rich state, such that sulfur compounds are eliminated.

The particulate matter filter 150 is continuously regenerated while the exhaust gas is repeatedly cycled from the lean to the rich state and the rich to the lean state.

After the desulfation of the nitrogen oxide purifier 140 is completed, the exhaust gas is controlled to be in the lean state to complete the regeneration of the particulate matter filter 150.

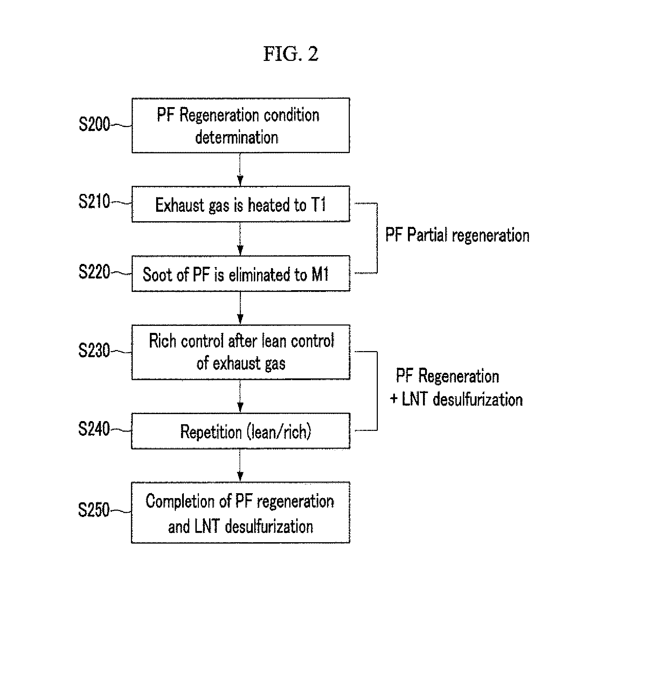

FIG. 2 is a flowchart showing an exhaust gas after-treatmenfi method according to an exemplary embodiment of the present disclosure.

Referring to FIG. 2, step S200 determines the regeneration condition of the particulate matter filter 150. The regeneration condition is satisfied when the soot amount trapped in the particulate matter filter 150, the travel distance, the travel time, or the pressure difference between an upstream side and a downstream side of the particulate matter filter 150 are within predetermined conditions.

The temperature of the exhaust gas flowing through the exhaust line 160 is raised to a temperature T1 (about 650 degrees Celsius) in step S210. In this step, the temperature of the exhaust gas may be raised in multiple steps by the main injector 125, the post-injection injector 132, or an intake air controller.

The particulate matter trapped in the particulate matter filter 150 is eliminated to a predetermined level M1 in step S220. In this step, the predetermined level M1 may be a value at which the particulate matter filter cannot be damaged by DTI (Drop To Idle) or DTO (Drop To Overrun).

In a case in which the sulfur compound is eliminated from the nitrogen oxide purifier 140 after the particulate matter filter 150 is completely regenerated, the time that the exhaust gas temperature is sustained at a high temperature longer, and the particulate matter filter 150 and the nitrogen oxide purifier 140 may be degraded by the high temperature. After a predetermined amount of particulate matter trapped in the particulate matter filter 150 is eliminated, the desulfation mode of the nitrogen oxide purifier 140 reduces fuel consumption and prevents the degradation of the particulate matter filter 150 and the nitrogen oxide purifier 140.

In step S230, the condition of the exhaust gas flowing into the nitrogen oxide purifier 140 is controlled to be in a lean state. Accordingly, the temperature of the nitrogen oxide purifier 140 is securely sustained to be less than 700 Celsius degrees.

After the exhaust gas in the nitrogen oxide purifier 140 is in the lean state, the exhaust gas is transformed to a rich state again. In this step, the temperature of the nitrogen oxide purifier 140 is controlled to be between the desulfation minimum temperature and desulfation high maximum temperature, thereby eliminating the sulfur compound absorbed in the nitrogen oxide purifier.

The condition of the exhaust gas alternately repeats the lean state and the rich state in step S240. Afterwards regenerating the particulate matter filter 150, the desulfation of the nitrogen oxide purifier 140 is completed in step S250.

The exhaust gas regenerates the particulate matter filter 150 in a lean state after the desulfation of the nitrogen oxide purifier 140 is completed.

The regeneration completion of the particulate matter filter 150 may be determined when amount of trapped particulate matter is less than a predetermined level, the regeneration time passes a predetermined value, or the pressure difference is less than a predetermined value.

The desulfation condition of the nitrogen oxide purifier 140 is when the amount of sulfur compound thereof is less than a predetermined value, the desulfation time is longer than a predetermined value, or the sum of the rich condition sustaining time is longer than a predetermined value.

The time that the exhaust gas is being sustained in a lean state and the exhaust gas in a rich state can be predetermined. The time can be varied by the exhaust gas temperature in the particulate matter filter 150 or the nitrogen oxide purifier 140.

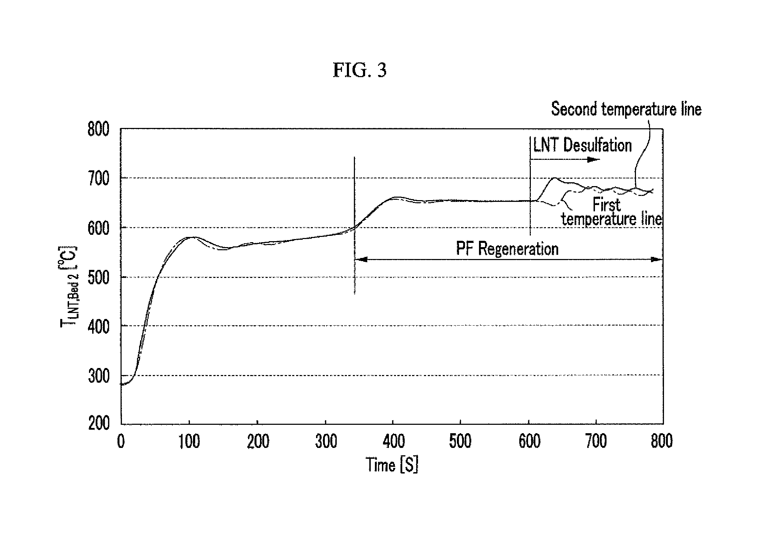

FIG. 3 is a graph showing temperature of a nitrogen oxide purifier in an exhaust gas after-treatment method according to an exemplary embodiment of the present disclosure.

Referring to FIG. 3, a horizontal axis denotes time and a vertical axis denotes temperature of nitrogen oxide purifier. The temperature of the nitrogen oxide purifier 140 or the particulate matter filter 150 can be calculated with the temperature of the exhaust gas where the exhaust gas temperature may be the temperature of the nitrogen oxide purifier 140 or the particulate matter filter 150.

As shown in the drawings, the temperature of the exhaust gas is raised from about 600 to 700 degrees Celsius so as to regenerate the particulate matter filter 150.

The desulfation of the nitrogen oxide purifier 140 is performed during the regeneration of the particulate matter filter 150. Here, a first temperature line in which the exhaust gas condition is transformed from a lean to a rich state and a second temperature line in which the exhaust gas condition is transformed from a rich to a lean state have different characteristics from each other.

As shown in the first temperature line, the temperature of the nitrogen oxide purifier140 descends to be stable. And, the temperature thereof is sustained to be from 650 to 700 degrees Celsius again. In the second temperature line, there is a danger that the temperature of the nitrogen oxide purifier 140 can be raised to exceed 700 degrees Celsius, and this condition can damage the nitrogen oxide purifier 140 or can deteriorate exhaust gas purification performance.

As described above, only predetermined amount of the particulate matter trapped by the particulate matter filter 150 is eliminated, and the desulfation mode of the nitrogen oxide purifier 140 is performed to reduce the fuel consumption and to prevent the degradation of the particulate matter filter 150 and the nitrogen oxide purifier 140.

Further, while the particulate matter filter 150 is being regenerated, after the exhaust gas is in a lean state so as to eliminate sulfur from the nitrogen oxide purifier 140, the exhaust gas is controlled to be in a rich state to securely control the temperature of the nitrogen oxide purifier 140 and prevent the degradation thereof.

While the disclosure has been described in connection with what is presently considered to be practical exemplary embodiments, it is to be understood that the inventive concept is not limited to the disclosed embodiments, but, on the contrary, is intended to cover various modifications and equivalent arrangements included within the spirit and scope of the appended claims.

## Claims

1. An exhaust gas after-treatment method, comprising:
determining a regeneration condition of a particulate matter filter;
eliminating a trapped particulate matter up to a predetermined amount by raising a temperature of an exhaust gas to a first predetermined value so as to regenerate the particulate matter filter;
controlling an exhaust gas that flows into a nitrogen oxide purifier in a lean condition while the particulate matter filter is being regenerated;
eliminating sulfur components from the nitrogen oxide purifier by controlling exhaust gas that flows into the nitrogen oxide purifier after the lean condition is performed; and
repeating the lean condition and a rich condition, and completing the regeneration of the particulate matter filter, or completing the elimination of the sulfur components from the nitrogen oxide purifier.

2. The exhaust gas after-treatment method of claim 1, wherein the first value ranges from 600 to 700 degrees Celsius.

3. The exhaust gas after-treatment method of claim 1 or 2, wherein a temperature of exhaust gas is raised to the first value in multiple steps to protect the particulate matter filter.

4. The exhaust gas after-treatment method of claim 1, wherein the nitrogen oxide purifier is disposed at a downstream side of the exhaust manifold.

5. The exhaust gas after-treatment method of claim 1, wherein a temperature of the exhaust gas flowing into the nitrogen oxide purifier is controlled to be lower than 700 degrees Celsius such that the particulate matter trapped in the particulate matter filter is eliminated in the lean condition.

6. The exhaust gas after-treatment method of claim 1, wherein the temperature of the exhaust gas flowing into the nitrogen oxide purifier is controlled to be between a sulfur elimination minimum temperature and a sulfur elimination maximum temperature in the eliminating of the sulfur components from the nitrogen oxide purifier.

7. The exhaust gas after-treatment method of claim 1, wherein the regeneration condition of the particulate matter filter is determined by an amount of the particulate matter trapped in the particulate matter filter, a travel distance, a travel time, or a front/rear side pressure difference of the particulate matter filter.

8. The exhaust gas after-treatment method of claim 1, wherein the temperature of the exhaust gas flowing into the particulate matter filter or the nitrogen oxide purifier is controlled by a main injector injecting fuel into a combustion chamber, an intake air control device, or a post-injection injector.

9. The exhaust gas after-treatment method of claim 1, wherein a completion of the regeneration of the particulate matter filter is determined by an amount of the particulate matter trapped in the particulate matter filter, a front/rear pressure difference, or a regeneration time.

10. The exhaust gas after-treatment method of claim 1, wherein a completion of the sulfur elimination of the nitrogen oxide purifier is determined by a sulfur amount that is formed in the nitrogen oxide device, a sulfur elimination time, or a sum of the rich condition duration time in the sulfur elimination process.

11. The exhaust gas after-treatment method of claim 1, wherein the exhaust gas is controlled to be in a lean condition when the sulfur elimination of the nitrogen oxide purifier is completed and the regeneration of the particulate matter filter is not completed.
